# EUROPÄISCHE PATENTSCHRIFT

(11) **EP 0 917 994 B1**
(45) Veröffentlichungstag und Bekanntmachung des Hinweises auf die Patenterteilung: **09.04.2003**
(21) Anmeldenummer: 98121564.3
(22) Anmeldetag: 18.11.1998
(51) Int. Cl.: B60R 21/16

(54) **Gassack mit regelbarem Auslassquerschnitt**
Airbag with adjustable vent cross section
Coussin gonflable avec une ouverture de dégonflage à section transversale réglable

(30) Priorität: 19.11.1997 DE 29720461 U
(43) Veröffentlichungstag der Anmeldung: 26.05.1999
(73) Patentinhaber: TRW Automotive Safety Systems GmbH, 63743 Aschaffenburg (DE)
(72) Erfinder: Braunschädel, Axel, 63773 Goldbach (DE)
(74) Vertreter: Degwert, Hartmut, Dipl.-Phys.

(56) Entgegenhaltungen:
- EP-A- 0 639 484
- EP-A- 0 670 247
- DE-A- 1 962 890
- DE-A- 3 618 060
- GB-A- 2 302 845
- US-A- 4 097 065

## Beschreibung

Die Erfindung betrifft eine Aufprall-Schutzvorrichtung für Insassen von Kraftfahrzeugen mit einem zusammenlegbaren Gassack und einem Gasgenerator zum explosionsartigen Aufblasen des Gassacks bei Zündung einer im Gasgenerator angeordneten Treibladung, wobei das Gas beim Eintauchen eines Kraftfahrzeuginsassen in den aufgeblasenen Gassack über einen Auslaß aus dem Gassack entweichen kann.

Derartige Aufprall-Schutzvorrichtungen sind unter der Kurzbezeichnung Airbag seit vielen Jahren bekannt und nahezu alle modernen Kraftfahrzeuge sind damit serienmäßig ausgerüstet. Inzwischen werden nicht nur die im Lenkrad untergebrachten Airbags für den Fahrzeuglenker, sondern auch Beifahrer-Airbags, Seiten-Airbags, Kopf-Airbags u.s.w. serienmäßig oder zumindest wahlweise angeboten. Zweck all dieser Aufprall-Schutzvorrichtungen ist es, Verletzungen der Fahrzeuginsassen in Folge zu hoher Beschleunigungen zu vermeiden, d.h. die bei einem Unfall auftretenden Relativbewegungen zwischen dem Körper bzw. Körperteilen der Insassen und den benachbarten bzw. gegenüberliegenden Karosserieteilen soweit abzubremsen, daß die Aufprallenergie möglichst unterhalb solcher Größen bleibt, bei denen schwere Verletzungen verursacht werden.

Dazu wird mittels geeigneter Beschleunigungssensoren ein Signal ausgelöst, das ein schlagartiges Aufblasen des Airbags bewirkt, um in kürzester Zeit zwischen Insassen und Karosserieteilen ein Kissen zu installieren, in das der Fahrzeuginsasse eintauchen kann und durch das er auf unschädliche Relativgeschwindigkeiten zur Karosserie abgebremst werden kann. Dazu muß das Kissen oder Gaspolster nachgiebig ausgebildet werden, d.h. es muß zwar schlagartig seine volle Größe erreichen, es darf aber nicht hart bzw. voll elastisch bleiben und es darf den eintauchenden Körper nicht zurückwerfen. Es muß vielmehr ein eher plastisches Stoßverhalten aufweisen und unter dem Einfluß der aufprallenden Masse zusammendrückbar sein.

Dazu muß die Gasfüllung aus dem Airbag entweichen können. Dies wird vielfach dadurch erreicht, daß der Gassack aus einem Gewebe besteht, das vollflächig eine gewisse Gasdurchlässigkeit aufweist, die sich beim schlagartigen Aufblasen nicht negativ auswirkt, beim Eintauchen des Körpers aber zu einer zumindest teilweisen Entleerung des Gassacks führt, wodurch letzteres das angestrebte plastische Stoßverhalten annimmt.

Aus der GB-A-2 302 845 ist eine eingangs genannte Aufprall-Schutzvorrichtung für Insassen von Fahrzeugen bekannt, die einen Gassack mit einer Auslaßöffnung aufweist. Die Auslaßöffnung ist von einem Gewebeteil gasdicht abgedeckt. Beim Eintauchen eines Fahrzeuginsassen in den Gassack kann die Auslaßöffnung mittels einer am Gewebeteil befestigten Schnur geöffnet werden.

Das Aufblas- und Auslaßverhalten von Airbags wird mit sogenannten "Dummys" in Aufprallversuchen getestet. Dabei werden dem menschlichen Körper nachgebildete Puppen in einer Fahrzeugkarosserie angeordnet, angeschnallt und mit einer definierten Geschwindigkeit gegen ein feststehendes Hindernis gefahren. Mittels einer Vielzahl von Beschleunigungssensoren wird dabei der Bewegungsablauf verschiedener Körperteile ermittelt und zusammen mit den Geschwindigkeits- und Beschleunigungsparametern der Karosserie ausgewertet, um Parameter für die Auslegung der Aufprall-Schutzvorrichtungen angeben zu können. Nicht zuletzt wird auf diese Weise auch das Ausströmverhalten von Airbags festgelegt.

Dabei ergibt sich das Problem, daß die bei einem Unfall in einen Airbag einfallende Körpermasse in weiten Grenzen schwanken kann. Mit 50 und 100 kg ist nur grob der Gewichtsbereich von Fahrzeuginsassen umschrieben. Es dürfte einleuchten, daß ein großer, kräftiger Mann vom Airbag anders "gebremst" werden muß, als eine kleine, schlanke Frau.

Dementsprechend werden die Aufprallversuche auch mit unterschiedlich schweren Dummys durchgeführt, für die man eine Prozentklassifizierung entwickelt hat. Man spricht von einem 5%-Dummy, wenn man eine kleine Aufprallmasse simulieren will und von einem 95%-Dummy, wenn man eine große Aufprallmasse simulieren will.

Für die Auslegung der Airbags ergibt sich daraus das Problem, daß man nicht vorhersagen kann, ob bei einem Unfall eine kleine Frau oder ein großer Mann in den schlagartig aufgeblasenen Gassack fallen wird. Hinsichtlich der Auslegung des Aufblasvolumens muß man an die obere Grenze gehen, hinsichtlich des Auslaßverhaltens kann man das nicht, weil der Airbag für die kleine Frau dazu zu "hart" wäre und seinerseits Verletzungen verursachen könnte.

Es besteht somit die Aufgabe, das Auslaßverhalten von Aufprall-Schutzvorrichtungen der eingangs genannten Art so zu beeinflussen, daß ein hinsichtlich Aufblasvolumen und Aufblasgeschwindigkeit unveränderlicher Gassack ein an die eintauchende Körpermasse angepaßtes Auslaßverhalten aufweist, so daß mit demselben Airbag alle möglichen Fahrzeuginsassen optimal geschützt werden können.

Zur Lösung dieser Aufgabe wird erfindungsgemäß vorgeschlagen, daß der Strömungsquerschnitt des Auslasses proportional zur elastischen Dehnung des Gassacks mittels eines an der Gewebefläche des Gassacks angeordneten, und in einer Schlinge um den Auslaß herum und über Dehnungsbereiche des Gassacks geführten unelastischen Fadens infolge des beim Eintauchen eines Fahrzeuginsassen in den Gassack erzeugten Innendrucks verringerbar ist, wobei die Außenabschnitte des Fadens einander überkreuzend geführt und dessen Enden auf der Oberfläche des Gassacks befestigt oder miteinander verbunden sind.

Ein derartig ausgebildeter Gassack hat den Vorteil, daß er sich hinsichtlich des Auslaßverhaltens selbsttätig auf die eintauchende Körpermasse einstellt, wobei der Auslaßquerschnitt so gesteuert wird, daß das Gas beim Eintauchen eines leichten Körpers schneller entweichen kann, als beim Eintauchen eines schweren Körpers. Dieser Vorteil wird auf sehr einfache Weise erreicht, denn zur Steuerung des Auslaßquerschnitts ist kein gesonderter Regelkreis mit Sensoren zur Ermittlung des Körpergewichts erforderlich, weil die erfindungsgemäß angeordneten Bauteile ohne weiteres eine wirksame, selbsttätige Regelung des Auslaßquerschnitts bewirken können.

Vorteilhafte und zweckmäßige Ausgestaltungen des Erfindungsgedankens sind in den Unteransprüchen 2 bis 10 beschrieben. Weitere Einzelheiten werden anhand der in den Figuren 1 bis 6 dargestellten Ausführungsbeispiele näher erläutert. Es zeigen:
- Figur 1 einen aufgeblasenen Gassack mit einer ersten Ausführungsform der Erfindung;
- Figur 2 einen vergrößerten Ausschnitt aus Figur 1;
- Figur 3 eine zweite Ausführungsform des Erfindungsgedankens;
- Figur 4 eine dritte Ausführungsform des Erfindungsgedankens;
- Figur 5 eine vierte Ausführungsform des Erfindungsgedankens;
- Figur 6 einen zweckmäßig gestalteten Gewebeabschnitt;

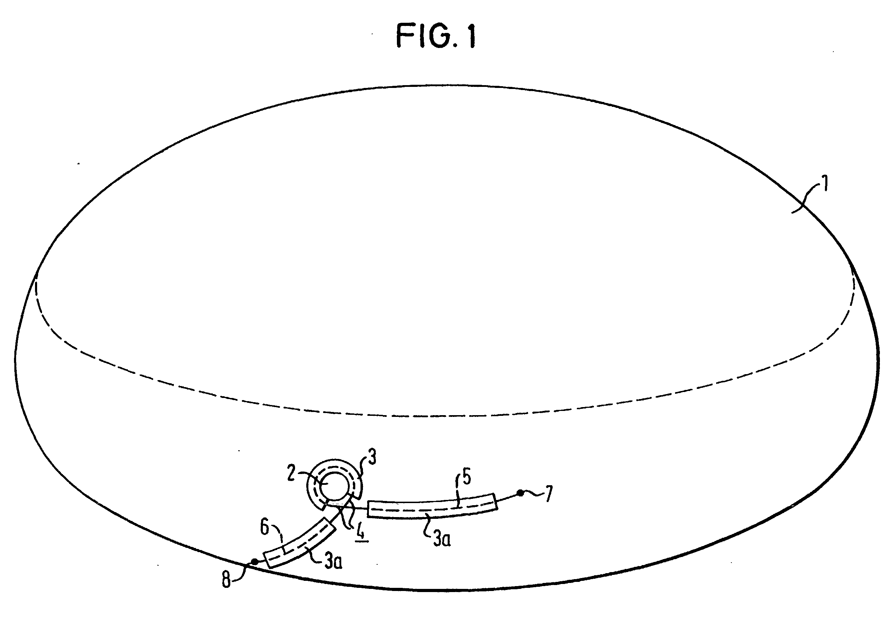

Bei dem in Fig. 1 dargestellten Gassack 1 ist der Auslaß 2 im Meridianbereich angeordnet, in dem beim Eintauchen eines Fahrzeuginsassen in den Gassack 1 erfahrungsgemäß die größten Dehnungen auftreten. Dementsprechend ist auch der Faden mit der Schlinge 4, den Außenabschnitten 5 und 6 sowie den Enden 7 und 8 in dem am stärksten gedehnten Bereich des Gassacks 1 angeordnet. Er ist in einer Schlinge 4 um den Auslaß 2 herumgeführt und dabei in einer Führung 3 längsverschieblich angeordnet. Die Außenabschnitte 5 und 6 sind einander überkreuzend und in Führungen 3a längsverschieblich bis zu den mit dem Gassack 1 befestigten Enden 7 und 8 verlängert. Bei einer Drehung des Gassacks 1 wird der Abstand zwischen den Enden 7 und 8 vergrößert und der aus unelastischem Material bestehende Faden derart gespannt, daß sich die Schlinge 4 zwangsläufig zusammenzieht und damit den Querschnitt des Auslasses 2 verkleinert. Es leuchtet ohne weiteres ein, daß die Verkleinerung des Auslaßquerschnitts proportional zur Dehnung des Gassacks 1 erfolgt, die ihrerseits von dem durch das Eintauchen eines Fahrzeuginsassen in den Gassack 1 erzeugten Innendruck abhängig ist. Auf diese Weise wird das angestrebte Ziel erreicht, das Ausströmen des Gases aus dem Gassack 1 beim Eintauchen eines leichten Körpers weniger zu behindern, als beim Eintauchen eines schweren Körpers.

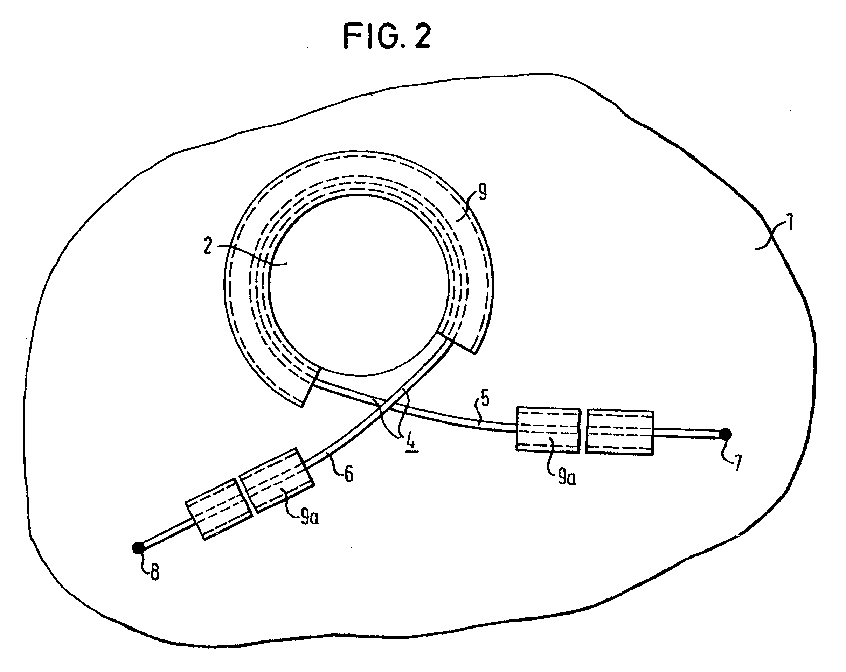

Bei der Ausführungsform gemäß Fig. 2 bestehen die Führungen für den Faden aus Gewebestreifen 9 und 9a, die auf den Gassack 1 aufgenäht sind. Selbstverständlich ist es auch möglich, die Gewebestreifen auf andere Weise mit dem Gassack 1 zu verbinden, wichtig ist nur, daß Führungen geschaffen werden, in denen der Faden längsbeweglich gehalten wird. Auslaß 2, Schlinge 4, Außenabschnitte 5 und 6 des Fadens sowie dessen Enden 7 und 8 entsprechen der Ausführungsform gemäß Fig. 1.

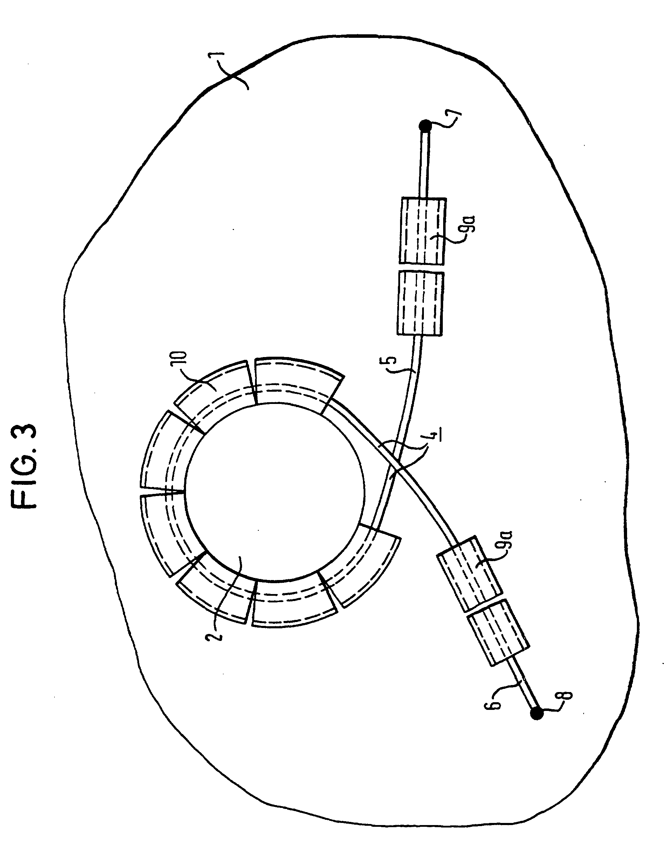

Die Ausführungsform gemäß Fig. 3 unterscheidet sich von derjenigen gemäß Fig. 2 lediglich dadurch, daß die Fadenführung im Bereich der Schlinge von schlaufenartig nach außen umgeklappt und randseitig vernähten Bereichen 10 des flexiblen Gassackmaterials gebildet ist. Auf diese Weise kann das zur Schaffung des Auslasses 2 zu entfernende Gewebematerial des Gassacks 1 sinnvoll und kostensparend genutzt werden.

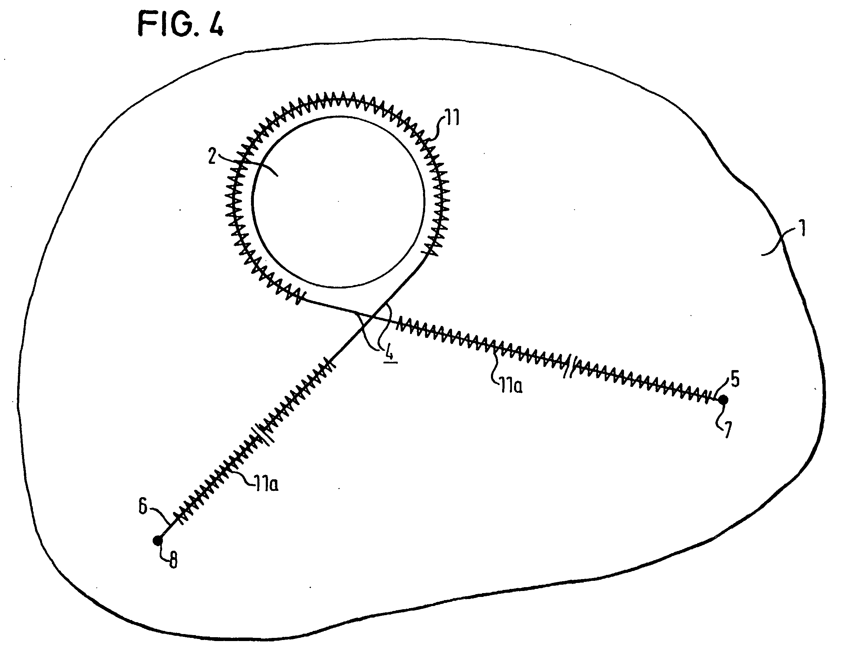

Bei der Ausführungsform gemäß Fig. 4 besteht die Führung für den Faden aus einer Zickzacknaht 11, 11a, die derart über die geführten Bereiche des Fadens gelegt ist, daß der Faden darunter längsbeweglich gehalten wird. Die übrigen Bezugsziffern entsprechen denen in den Figuren 1 bis 3 und müssen nicht nochmals erläutert werden.

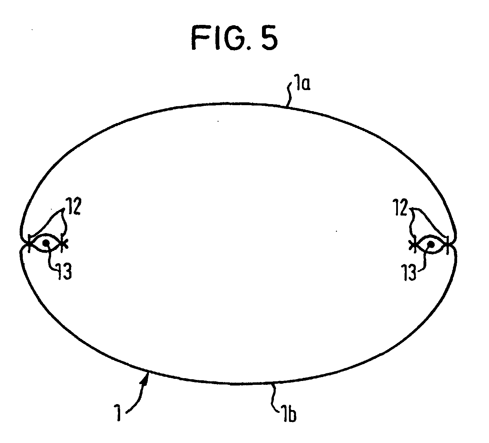

Bei der Ausführungsform gemäß Fig. 5 besteht der Gassack 1 aus zwei Gewebeabschnitten 1a, 1b, die über eine Meridian-Doppelnaht 12 miteinander verbunden sind. Bei einer derartigen Naht kann der Faden 13 ganz oder teilweise in der Meridian-Doppelnaht 12 geführt werden.

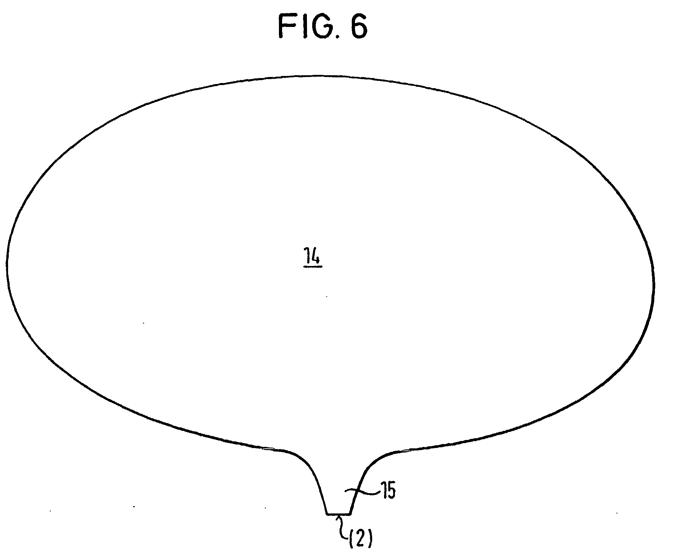

Fig. 6 zeigt einen Gewebeabschnitt 14, der zur Herstellung eines Gassacks mit einem zweiten, gleichgeschnittenen Gewebeabschnitt vernäht wird. Um das Zusammenziehen des Auslaßquerschnitts zu erleichtern, ist an den Gewebeabschnitten 14 ein flaschenhalsartiger Ansatz 15 vorgesehen, der bei aufgeblasenem Gassack einen Bereich bildet, in dem das Gewebe erheblich geringeren Spannungen ausgesetzt ist, als in den übrigen Bereichen, über die erfindungsgemäß der Faden 13 geführt wird. Das bedeutet, daß der Widerstand des vom Innendruck gespannten Gewebes gegen eine Verkleinerung des Auslaßquerschnitts 2 hier kleiner ist, und daß man daher mit kleineren "Stellkräften" zur Anpassung des Ausströmverhaltens an die eintauchende Körpermasse auskommt.

## Patentansprüche

1. Aufprall-Schutzvorrichtung für Insassen von Fahrzeugen, mit einem zusammenlegbaren Gassack (1) und einem Gasgenerator zum explosionsartigen Aufblasen des Gassacks (1) bei Zündung einer im Gasgenerator angeordneten Treibladung, wobei das Gas beim Eintauchen eines Kraftfahrzeuginsassen in den aufgeblasenen Gassack (1) über einen Auslaß (2) aus dem Gassack (1) entweichen kann, und der Strömungsquerschnitt des Auslasses (2) proportional zur elastischen Dehnung des Gassacks (1) mittels eines an der Gewebefläche des Gassacks (1) angeordneten, und in einer Schlinge (4) um den Auslaß (2) herum und über Dehnungsbereiche des Gassacks (1) geführten unelastischen Fadens infolge des beim Eintauchen eines Fahrzeuginsassen in den Gassack (1) erzeugten Innendrucks verringerbar ist, und wobei die Außenabschnitte (5, 6) des Fadens einander überkreuzend geführt und dessen Enden (7, 8) auf der Oberfläche des Gassacks (1) befestigt oder miteinander verbunden sind.

2. Vorrichtung nach Anspruch 1, **dadurch gekennzeichnet, daß** die Außenabschnitte (5, 6) des Fadens in Führungen (3a) über solche Oberflächenbereiche des Gassacks (1) geführt sind, die sich beim Eintauchen eines Fahrzeuginsassen in den Gassack (1) stark dehnen.

3. Vorrichtung nach einem der Ansprüche 1 oder 2, **dadurch gekennzeichnet, daß** die Führung für den Faden durch aufgenähte Gewebestreifen (9, 9a) gebildet wird.

4. Vorrichtung nach einem der Ansprüche 1 oder 2, **dadurch gekennzeichnet, daß** der Faden im Bereich der Schlinge (4) in schlaufenartig nach außen umgeklappten und randseitig vernähten Bereichen (10) des flexiblen Gassackmaterials geführt ist.

5. Vorrichtung nach einem der Ansprüche 1 oder 2, **dadurch gekennzeichnet, daß** die Führung des Fadens (13) durch eine Steppstichnaht oder Zickzacknaht (11, 11a) gebildet ist.

6. Vorrichtung nach einem derAnsprüche 1 oder 2, **dadurch gekennzeichnet, daß** der Gassack (1) aus zwei Gewebeabschnitten besteht, die längs einer Meridian-Doppelnaht (12) miteinander verbunden sind, und daß der Faden (13) ganz oder teilweise in der Meridian-Doppelnaht (12) geführt ist.

7. Vorrichtung nach einem der Ansprüche 1 oder 2, **dadurch gekennzeichnet, daß** der Gassack (1) aus zwei Gewebeabschnitten (14) mit flaschenhalsartigen Ansätzen (15) besteht, die randseitig unter Ausbildung eines Auslasses (2) am Ende der Ansätze (15) miteinander verbunden sind.

## Claims

1. An impact protection device for occupants of vehicles, comprising a foldable gas bag (1) and a gas generator for the explosion-like inflation of the gas bag (1) on ignition of a propellant charge arranged in the gas generator, the gas being able to escape from the gas bag (1) via an outlet (2) when a motor vehicle occupant plunges into the inflated gas bag (1), and the flow cross-section of the outlet (2) being able to be reduced in proportion to the elastic expansion of the gas bag (1) as a result of the internal pressure generated when a vehicle occupant plunges into the gas bag (1), by means of a non-elastic thread arranged on the fabric surface of the gas bag (1) and guided in a loop (4) around the outlet (2) and over expansion regions of the gas bag (1), and the outer sections (5, 6) of the thread being guided crossing each other and the ends (7, 8) thereof being fastened on the surface of the gas bag (1) or being connected with each other.

2. The device according to Claim 1, **characterized in that** the outer sections (5, 6) of the thread are guided in guides (3a) over those surface regions of the gas bag (1) which expand greatly when a vehicle occupant plunges into the gas bag (1).

3. The device according to either one of Claims 1 or 2, **characterized in that** the guide for the thread is formed by sewn-on fabric strips (9, 9a).

4. The device according to either one of Claims 1 or 2, **characterized in that** the thread is guided in the region of the loop (4) in regions (10) of the flexible gas bag material which are folded over outwards in the manner of loops and are sewn on the marginal side.

5. The device according to either one of Claims 1 or 2, **characterized in that** the guide of the thread (13) is formed by a backstitch seam or zigzag seam (11, 11a).

6. The device according to either one of Claims 1 or 2, **characterized in that** the gas bag (1) consists of two fabric sections which are connected with each other along a meridian double seam (12) and that the thread (13) is guided wholly or partially in the meridian double seam (12).

7. The device according to either one of Claims 1 or 2, **characterized in that** the gas bag (1) consists of two fabric sections (14) with bottleneck-like shoulders (15) which are connected with each other on the marginal side with the formation of an outlet (2) at the end of the shoulders (15).

## Revendications

1. Dispositif de protection contre les chocs pour des passagers de véhicules, comportant un coussin à gaz repliable (1) et un générateur de gaz pour le gonflage de manière explosive du coussin à gaz (1) lors de l'amorçage d'une charge propulsive agencée dans le générateur de gaz, le gaz pouvant s'échapper hors du coussin à gaz (1) via une sortie (2) lorsqu'un passager du véhicule plonge dans le coussin à gaz (1) gonflé, et la section d'écoulement de la sortie (2) pouvant être réduite proportionnellement à l'expansion élastique du coussin à gaz (1), à la suite de la pression intérieure engendrée lorsqu'un passager plonge dans le coussin à gaz (1), au moyen d'un un fil non élastique agencé sur la surface du tissu du coussin à gaz (1) et guidé en forme de boucle (5) autour de la sortie (2) et sur les zones d'expansion du coussin à gaz (1), et les tronçons extérieurs (5, 6) du fil étant guidés croisés l'un avec l'autre, et ses extrémités (7, 8) étant fixées à la surface du coussin à gaz (1) ou reliées l'une à l'autre.

2. Dispositif selon la revendication 1, **caractérisé en ce que** les tronçons extérieurs (5, 6) du fil sont guidés dans des guidages (3a) via des zones de surface du coussin à gaz (1) qui s'étirent fortement lorsqu'un passager plonge dans le coussin à gaz (1).

3. Dispositif selon l'une des revendications 1 ou 2, **caractérisé en ce que** le guidage pour le fil est formé par des bandes de tissu (9, 9a) cousues.

4. Dispositif selon l'une des revendications 1 ou 2, **caractérisé en ce que** dans la zone de la boucle (4), le fil est guidé dans des zones (10) du matériau flexible du coussin à gaz, qui sont rabattues en forme de boucles vers l'extérieur et cousues sur les bords.

5. Dispositif selon l'une des revendications 1 ou 2, **caractérisé en ce que** le guidage du fil (13) est formé par un couture en points noués ou en zigzag (11, 11a).

6. Dispositif selon l'une des revendications 1 ou 2, **caractérisé en ce que** le coussin à gaz (1) est constitué par deux tronçons de tissu qui sont reliés l'un à l'autre le long d'une double couture de méridien (12), et **en ce que** le fil (13) est guidé entièrement ou en partie dans la double couture de méridien (12).

7. Dispositif selon l'une des revendications 1 ou 2, **caractérisé en ce que** le coussin à gaz (1) est constitué par deux tronçons de tissu (14) avec des appendices (15) en forme de goulot de bouteille qui sont reliés l'un à l'autre sur le bord en formant une sortie (2) à la fin des appendices (15).
